(19)

Europäisches
Patentamt
European
Patent Office
Office européen
des brevets

(11) **EP 4 325 306 A1**

(12) **EUROPEAN PATENT APPLICATION**
published in accordance with Art. 153(4) EPC

(43) Date of publication:
**21.02.2024  Bulletin 2024/08**

(21) Application number: **21936482.5**

(22) Date of filing: **16.04.2021**

(51) International Patent Classification (IPC):
**G05B 19/042** (2006.01)

(52) Cooperative Patent Classification (CPC):
**G05B 19/042**

(86) International application number:
**PCT/CN2021/087898**

(87) International publication number:
**WO 2022/217607 (20.10.2022 Gazette 2022/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Harbin Institute of Technology (Shenzhen)
(Institute of Science and Technology Innovation)
Shenzhen, Guangdong 518000 (CN)**
• **QKM Technology (Dong Guang) Co., Ltd
Dongguan, Guangdong 523808 (CN)**

(72) Inventors:
• **LOU, Yunjiang
Songshan Lake, Guangdong 523808 (CN)**
• **LIU, Xiong
Songshan Lake, Guangdong 523808 (CN)**
• **SHI, Jinbo
Songshan Lake, Guangdong 523808 (CN)**
• **CHEN, Lihui
Songshan Lake, Guangdong 523808 (CN)**
• **WANG, Hong
Songshan Lake, Guangdong 523808 (CN)**

(74) Representative: **Invent Horizon IP
Nordenskiöldsgatan 11A
211 19 Malmö (SE)**

(54) **METHOD FOR ACQUIRING ENCODER POSITION IN DISTRIBUTED SYSTEM, CONTROLLERS
AND SYSTEM**

(57)     A method, a controller and a system for acquiring an encoder position in a distributed system relate to the field of automatic control technology. The method include: acquiring, by the first controller, a retrieval time from a second controller (S101); querying the retrieved time from at least one correspondence between the time and the encoder position which are pre-latched (S102); if querying the retrieval time, determining, by the first controller, a target encoder position being the encoder position corresponding to the retrieval time in the correspondence (S103); if not querying the retrieval time, determining, by the first controller the target encoder position according to the following formula: $S_{t(n)} = S_{t(n-1)} + k\triangle t$ (S104); transmitting, by the first controller, the target encoder position to the second controller (S105). Therefore, efficient positioning of the encoder position and higher accuracy of the acquired encoder position are achieved.

| Acquiring, by the first controller, the retrieval time from the second controller | S101 |
| Querying, by the first controller, the retrieved time from a pre-latched correspondence of the at least one time and the encoder position | S102 |
| If querying the retrieval time, determining, by the first controller, a target encoder position being the encoder position corresponding to the retrieval time in the correspondence | S103 |
| If not querying the retrieval time, determining, by the first controller the target encoder position according to the following formula: $S_{t(n)} = S_{t(n-1)} + k\triangle t$ | S104 |
| Transmitting, by the first controller, the target encoder position to the second controller | S105 |

FIG. 3

EP 4 325 306 A1

## Description

### TECHNICAL FIELD

The present invention relates to the field of automatic control technology and, more specifically, to a method, a controller and a system for acquiring an encoder position in a distributed system.

### BACKGROUND

With the continuous development and progress of society, people's demand for industrial production is also expanding, so how to improve the accuracy and efficiency of industrial control is the larger problem faced today.

In the prior art, during industrial production, when information such as the encoder position on an industrial production line is processed, the process is controlled manually, i.e., the encoder position is determined manually by means of flow line production to control the relevant processing device to process the target object corresponding to the encoder position.

However, the industrial production efficiency is relatively low since the manual determination of the encoder position and other information makes the processing of the encoder information less efficient on the one hand and the acquired encoder information less accurate on the other hand, which leads to lower industrial production efficiency.

### SUMMARY

It is an object of the present invention to provide a method, a controller and a system for acquiring an encoder position in a distributed system in response to the above-mentioned deficiencies in the prior art, in order to solve the problems of lower efficiency of industrial production due to lower processing efficiency of encoder information and lower accuracy of the acquired encoder information in the prior art.

In order to achieve the above purposes, the technical solutions adopted in the embodiments of the present invention are as follows.

In a first aspect, provided in an embodiment of the disclosure is a method for acquiring an encoder position in a distributed system, wherein the distributed system includes a first controller, a second controller and an encoder, the first controller pre-latches at least one correspondence between a time and an encoder position, and the method includes:

  acquiring, by the first controller, a retrieval time from the second controller;
  querying, by the first controller, the retrieval time from the correspondence;

    if querying the retrieval time, determining, by the first controller, a target encoder position being the encoder position corresponding to the retrieval time in the correspondence;
    if not querying the retrieval time, determining, by the first controller the target encoder position according to the following formula:

$$S_{t(n)} = S_{t(n-1)} + k\triangle t,$$

    where $S_{t(n-1)}$ is the encoder position corresponding to the time closest to the retrieval time, $\triangle t$ is a time difference between the retrieval time and the time closest to the retrieval time, $k$ is a growth rate of the encoder position, and $n$ is a positive integer; and

  transmitting, by the first controller, the target encoder position to the second controller. Optionally, the growth rate is determined according to the following formula:

$$k = \left( \frac{S_{t1} - S_{t2}}{t_1 - t_2} + \frac{S_{t2} - S_{t3}}{t_2 - t_3} \cdots + \frac{S_{t(n-1)} - S_{tn}}{t_{(n-1)} - t_n} \right) / n \, .$$

Optionally, the method further includes: if querying the retrieval time, applying the retrieval time as an identifier; if not querying the retrieval time, applying 0 as an identifier.

Optionally, the first controller includes a first programmable unit array and a register set. The step of querying the retrieval time from the correspondence by the first controller includes:

querying, by the first programmable unit array, the retrieval time from the register set by cyclic reading and writing.

Optionally, the first controller further includes a second programmable unit array and an encoder unit connected to a corresponding encoder of the first controller. The method further includes:

acquiring, by the second programmable unit array, from the encoder unit the encoder position corresponding to the first controller, wherein the encoder position of the corresponding to the first controller is the position acquired from an encoder signal acquired by the encoder unit;

acquiring, by the second programmable unit array, a local time of the first controller from a local clock;

latching, by the second programmable unit array, the local time of the first controller and the acquired encoder position corresponding to the first controller;

writing, by the second programmable unit array, the encoder position corresponding to the first controller and the correspondence of the local time of the first controller into the register set.

Optionally, the first controller further includes a digital input channel and a filter unit located between the digital input channel and the second programmable unit array. The method further includes:

filtering, by the filtering unit, an external input signal received by the digital input channel;

acquiring, by the second programmable unit array, the external input signal processed by the filter unit.

Optionally, before the second programmable unit array acquires the external input signal processed by the filter unit, the method further includes:

acquiring, by the second programmable unit array, latch configuration parameters from the processor.

Optionally, the latch configuration parameters include latch source information for indicating an external trigger source of the encoder corresponding to the first controller, wherein:

the latch input and output pin information is used for indicating input pins of the digital input channel; and

the latch mode information is used for indicating a position latch mode of the encoder corresponding to the first controller.

Optionally, before the second programmable unit array writes the encoder position corresponding to the first controller and the correspondence of the local time of the first controller into the register set, the method includes:

triggering, by the second programmable unit array, a position latching function of the encoder corresponding to the first controller based on the latch mode information.

Optionally, writing the encoder position corresponding to the first controller and the correspondence of the local time of the first controller into the register set by the second programmable unit array, includes:

writing, by the second programmable unit array, the encoder position corresponding to the first controller and the correspondence of the local time of the first controller into the register set in a predetermined storage cycle period, wherein the storage cycle period is greater than the network delay from the digital input channel to the register set.

Optionally, the storage cycle period is equal to the period of change of the external input signal.

Optionally, the method further includes:

receiving, by the first controller, a zeroing instruction from the second controller and transmitting the zeroing instruction to the second programmable unit array;

processing, by the second programmable unit array, a zeroing operation to the latched encoder position corresponding to the first controller and the latched local time of the first controller, according to the zeroing instruction.

Optionally, transmitting the target encoder position to the second controller by the first controller includes:

transmitting, by the first controller, the target encoder position to the second controller via a real-time Ethernet message.

Optionally, the retrieval time is a time when the second controller issues a node control demand based on a corresponding location of a processor of the first controller.

In a second aspect, further provided in an embodiment of the disclosure is a controller including a processor and a field programmable gate array FPGA chip integrating a first programmable unit array and a register set pre-latched with at least one correspondence between a time and an encoder position, wherein:

the processor acquires a retrieval time from another controller and sends the retrieval time to the first programmable unit array;

the first programmable unit array queries the retrieval time from the correspondence;

if the retrieval time is queried, the first programmable unit array determines that the encoder position in the correspondence corresponding to the retrieval time is a target encoder position;

if the retrieval time is not queried, the first controller determines the target encoder position according to the following formula:

$$S_{t(n)} = S_{t(n-1)} + k\triangle t,$$

where $S_{t(n-1)}$ is the encoder position corresponding to the time closest to the retrieval time, $\Delta t$ is a time difference between the retrieval time and the time closest to the retrieval time, $k$ is a growth rate of the encoder position, and $n$ is a positive integer; and

the first programmable unit array further transmits the target encoder position to the processor, and the processor transmits the target encoder position to the other controller.

Optionally, a second programmable unit array and an encoder unit are also integrated on the FPGA chip. The encoder unit is connected to an encoder corresponding to the controller.

The second programmable unit array is used for acquiring from the encoder unit the encoder position corresponding to the controller. The encoder position corresponding to the controller is the position acquired from an encoder signal acquired by the encoder unit.

The second programmable unit array is further used for acquiring a local time of the controller from a local clock.

The second programmable unit array is further used for latching the acquired encoder position corresponding to the controller, and the local time of the controller.

The second programmable unit array is further used for writing into the register set the encoder position corresponding to the controller, and a correspondence of the local time of the controller.

Optionally, a digital input channel and a filter unit are also integrated on the FPGA chip. The filter unit is located between the digital input channel and the second programmable unit array.

The filtering unit is used for filtering the external input signal received by the digital input channel.

The second programmable unit array is further used for acquiring the external input signal after processing by the filtering unit.

Optionally, the second programmable unit array is further used for acquiring latch configuration parameters from the processor.

Optionally, the latch configuration parameters include: latch source information, latch input and output pin information, and latch mode information.

The latch source information is used to indicate an external trigger source for an encoder corresponding to the controller; the latch input and output pin information is used to indicate an input pin for the digital input channel; and the latch mode information is used to indicate a position latch mode for an encoder corresponding to the controller.

Optionally, the second programmable unit array is further used to trigger a position latching function of an encoder corresponding to the controller based on the latch mode information.

Optionally, the second programmable unit array is specifically used to write the encoder position corresponding to the controller, and the local time of the controller, into the register set in a predetermined storage cycle period, wherein the storage cycle period is greater than the network delay from the digital input channel to the register set.

Optionally, the processor is further used to receive a zeroing instruction from the other controller and transmit the zeroing instruction to the second programmable unit array;

The second programmable unit array is further used to perform a zeroing operation to the latched encoder position corresponding to the controller, and the latched local time of the controller, according to the zeroing instruction.

Optionally, the processor transmits the target encoder position to the second controller via a real-time Ethernet message.

In a third aspect, further provided in an embodiment of the disclosure is a distributed system, including a first controller and a second controller, wherein:

the first controller includes a processor and a field programmable gate array FPGA chip;
the second controller generates a message including a retrieval time and transmits to the processor of the first controller;
a first programmable unit array and a register set are integrated on the FPGA chip of the first controller, and the register set is pre-latched with at least one correspondence between a time and an encoder position;
the first programmable unit array queries the retrieval time from the correspondence;

if the retrieval time is queried, the first programmable unit array determines that the encoder position in the correspondence corresponding to the retrieval time is a target encoder position;

if the retrieval time is not queried, the first controller determines the target encoder position according to the following formula:

$$S_{t(n)} = S_{t(n-1)} + k\triangle t,$$

where $S_{t(n-1)}$ is the encoder position corresponding to the time closest to the retrieval time, $\triangle t$ is a time difference between the retrieval time and the time closest to the retrieval time, $k$ is a growth rate of the encoder position, and $n$ is a positive integer; and

the first programmable unit array further transmits the target encoder position to the processor of the first controller; and

the processor of the first controller transmits the target encoder position to the second controller.

The beneficial effects of the disclosure are as follows.

With reference to the method for acquiring an encoder position in a distributed system, the controller, and the distributed system provided in the disclosure, the method for acquiring an encoder position in the distributed system is applied to the distributed system, so that the method for acquiring an encoder position in the distributed system can include: acquiring the retrieval time from the second controller and querying the retrieval time from the correspondence, by the first controller; and determining the encoder position in the correspondence corresponding to the retrieval time as the target encoder position if querying the retrieval time; determining the target encoder position according to a formula if failing to query the time retrieve; and returning the target encoder position to the second controller by the first controller. In the technical solution of the disclosure, the target encoder position can be determined by selecting a suitable way for both cases of whether or not the retrieval time is queried, so as to return the target encoder position to the second controller, thereby enabling the second controller to carry out a motion control of a machinery device based on the position information, achieving efficient positioning for the encoder, and resulting in higher accuracy of the acquired encoder position.

Secondly, before the second programmable unit array acquires the external input signal, the external input signal is filtered by adding a filtering unit, which can effectively prevent signal jitter and facilitate the encoder position latch more flexible. In this case the latching of the encoder position corresponding to the first controller can be carried out in an accurate and timely manner.

In addition, a real-time Ethernet message is used for information transmission between the first controller and the second controller, which effectively improves the stability of the target encoder position transmission and reduces the transmission delay time.

**BRIEF DISCRIPTION OF THE DRAWINGS**

In order to more clearly illustrate the technical solutions in the embodiments of the present invention, the accompanying drawings to be used in the embodiments will be briefly described below. It should be appreciated that the following accompanying drawings illustrate only certain embodiments of the present invention and therefore should not be regarded as defining the scope. To those skilled in the art, other related drawings can be obtained from these drawings without creative effort.

FIG. 1 shows a schematic diagram of an application scenario of a distributed system provided in an embodiment of the disclosure.
FIG. 2 shows a block diagram of a distributed system provided in an embodiment of the disclosure.
FIG. 3 shows a flow diagram of a method for acquiring an encoder position in a distributed system provided in an embodiment of the disclosure.
FIG. 4 shows an example diagram of the correspondence between the pre-latched at least one time and encoder position.
FIG. 5 shows a flow diagram of another method for acquiring an encoder position in the distributed system provided in an embodiment of the disclosure.
FIG. 6 shows a flow diagram of another method for acquiring an encoder position in the distributed system provided in an embodiment of the disclosure.
FIG. 7 shows a schematic diagram of the processing logic of an encoder position latch function provided in an embodiment of the disclosure.

FIG. 8(a) shows an example diagram where the storage cycle period is less than the signal change period.

FIG. 8(b) shows an example diagram where the storage cycle period is greater than the signal change period.

FIG. 9 shows a flow diagram of another method for acquiring an encoder position in the distributed system provided in an embodiment of the disclosure.

FIG. 10 shows a schematic diagram of a controller provided in an embodiment of the disclosure.

## DETAILED DESCRIPTION

In order to make the objects, technical solutions and advantages of the embodiments of the present invention clearer, the technical solutions in the embodiments of the present invention will be described clearly and completely in the following, taking into account the accompanying drawings in the embodiments of the present invention. Clearly, the embodiments described are a number of the embodiments of the present invention rather than all of them.

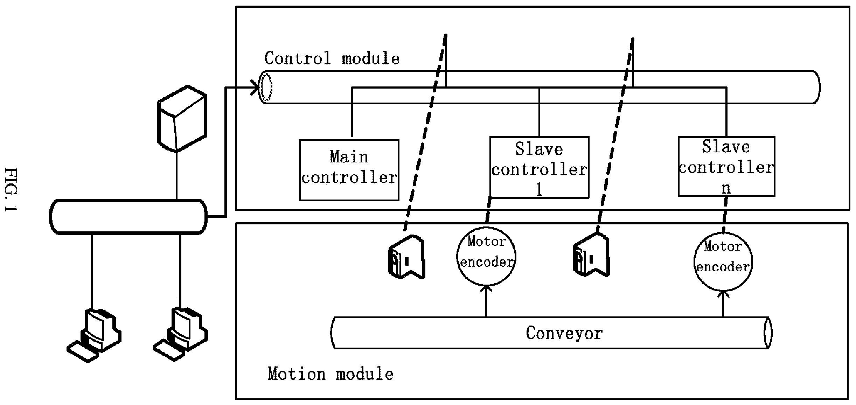

FIG. 1 shows a schematic diagram of an application scenario in a distributed system provided in an embodiment of the disclosure. It should be appreciated that the distributed system provided in the embodiment can be applied in industrial production for tracking and locating the encoder position on a production line so as to control of a robot based on the encoder position. As shown in FIG. 1, the application scenarios in the distributed system can involve: a control module, a motion module, and a trigger module. The control module can include a master controller and a plurality of slave controllers, wherein informations can be communicated via message transmission between the master controller and the plurality of slave controllers, or between the plurality of slave controllers. The motion module can include: a conveyor belt, a plurality of drive motors mounted on the conveyor belt, and an encoder, wherein one drive motor (DM) can correspond to one encoder, and the encoder is used to acquire position and speed information of the motor and convert it into an electrical signal. The triggering module includes a camera of which the shutter triggers to generate an external input signal to trigger the generation of retrieval control information by a predetermined controller in the distributed system. In some embodiments, the number of slave controllers in the control module corresponds to the number of drive motors in the motion module, and each slave controller is connected to an encoder in the drive motor corresponding to it. In other embodiments, the main controller in the control module can also correspond to a drive motor and be connected to an encoder in its corresponding drive motor.

The other controllers can control the latching of the encoder positions and the retrieval of the positions, etc., in accordance with the retrieval control information sent by the predetermined controller, and feedback the results of the latching of the positions and the results of the retrieval of the positions to the predetermined controller to enable the predetermined controller, so as to control the robot to carry out the corresponding movements in accordance with the position information of each encoder acquired.

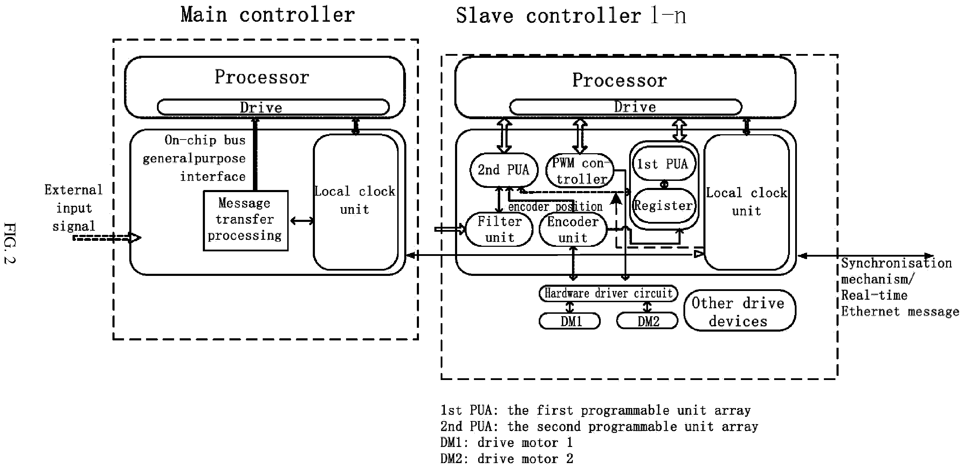

FIG. 2 shows a block diagram of a distributed system provided in an embodiment of the disclosure. As shown in FIG. 2, the distributed system can include: a master controller and slave controllers. It is noted that the slave controllers shown in the FIG. 2 can represent a plurality of identical slave controllers in the distributed system. In some embodiments, a predetermined controller in the distributed system can generate retrieval control information based on the received external trigger signal and send the retrieval control information to other controllers, which can carry out processing such as latching and retrieving corresponding to the encoder position based on the retrieval control information, and feedback the processing results to the predetermined controller.

In the embodiments, the predetermined controller can be used to generate a message including the retrieval time and transmit the message to the processors of the other controllers.

In one implementation, the predetermined controller can include: a processor and a Field Programmable Gate Array (FPGA) chip. The FPGA chip of the predetermined controller integrates a message processing unit. The message processing unit is used to generate a message including the retrieval time and to transmit the message to a processor of the predetermined controller and from the processor of the predetermined controller to processors of other controllers.

In other implementations, the predetermined controller can also be a conventional controller, i.e., not having an FPGA chip, but having some other processing chip, to which the disclosure is not limited.

Other controllers can include processors, FPGA chips and motion modules. The processors of the other controllers send down encoder position latch signals to the FPGA chip based on the retrieval control signals received from the predetermined controllers to allow the FPGA chip to acquire the encoder position and time information from the encoder and latch it.

In the embodiment, the FPGA chip on the other controller can be integrated with: a first programmable unit array (PUA), a register set, a second programmable unit array (PUA), an encoder unit, a pulse width modulation (PWM) controller, a filter unit and a local clock unit. The motion module can include: hardware drive circuitry, a drive motor, an encoder mounted in the drive motor, and other drive devices.

Optionally, the predetermined controller can be the second controller in the following embodiments, and the other controllers can be the first controller in the following embodiments. The first controller can be a slave controller and the second controller can be a master controller or a slave controller. In one implementation, the first controller can be a slave controller and the second controller can be any other slave controller among the plurality of slave controllers; in another implementation, the first controller can be a slave controller and the second controller can be a master controller.

In the embodiment, the first programmable unit array of the first controller is used to perform the retrieval of the encoder position based on the retrieval control information received from the second controller, and the second programmable unit array is used to perform the latching of the encoder position. The second programmable unit array can acquire a position of the first controller corresponding to the encoder from the encoder unit, and a local time of the first controller from a local clock, and latch the acquired encoder position corresponding to the first controller and the local time of the first controller. At the same time, based on the received external trigger signal, the correspondence between the position and time of the encoder acquired from the encoder unit is written into the register set, and the time of the encoder is synchronised with the local time in the encoder local clock unit. The pulse width modulation controller is used to control the rotation of the drive motor by controlling the hardware drive circuit.

The method for acquiring an encoder location in the distributed system provided in the disclosure is exemplarily described below by way of a plurality of embodiments.

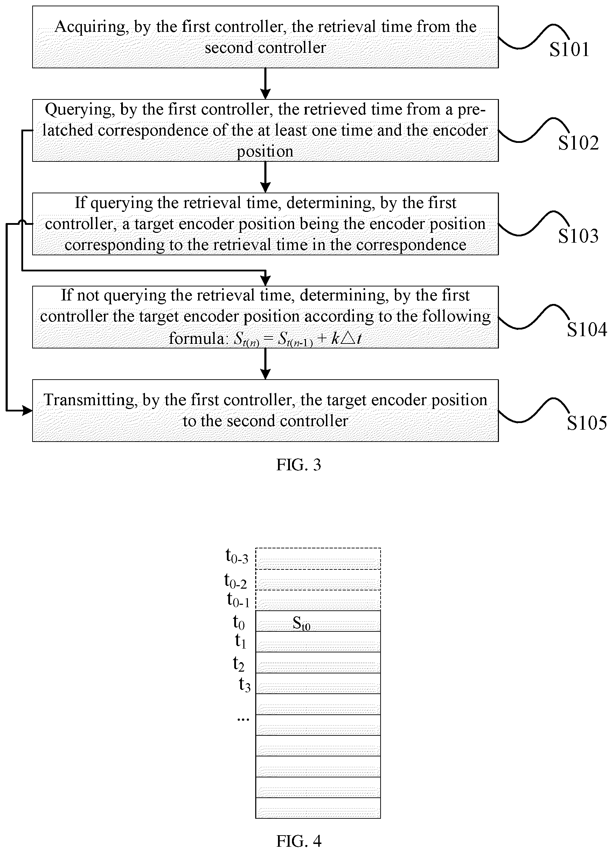

FIG. 3 shows a flow diagram of a method for acquiring an encoder position in a distributed system provided in an embodiment of the disclosure. The distributed system includes a first controller, a second controller and an encoder, wherein at least one correspondence between time and encoder position is pre-latched in the first controller. The method can be implemented by means of software and/or hardware. As shown in FIG. 3, the method can include steps S101 to S105.

At S101, the first controller acquires the retrieval time from the second controller.

Optionally, in the embodiment, when the second controller receives an external trigger signal (in the embodiment, the high-speed IO interface trigger signal DIN signal is used as an example), the second controller can generate a telegram containing the retrieval time and send the telegram to the processor of the first controller. In the embodiment a real-time Ethernet telegram (QNET) can be used for the second controller to transmit the telegram to the processor of the first controller.

It is noted that the retrieval time can be a time when the second controller issues a node control demand based on the corresponding location of the processor of the first controller. That is, the second controller can issue a time for the demand for control of a node at a position corresponding to a processor of the first controller corresponding to the machine device, according to the demand for control of the machine device. In the embodiment the retrieval time is also the information used to indicate the retrieval time, e.g. if the second controller needs to retrieve the position corresponding to the encoder at 2:30, then the corresponding retrieval time can be 2:30. In the embodiment, the retrieval time can be represented in the form of a timestamp, and is certainly not limited to that representation, but can also be represented in the form of a time signature, etc.

Alternatively, the processor of the first controller in the embodiment can be a Processing System (PS) side software system (programming for running an operating system) included in the FPGA chip. The FPGA chip can be a Programmable Logic (PL) end logic circuit (programmable digital circuit for hardware programming) included in the FPGA chip.

At S102, the first controller queries the retrieved time from a pre-latched correspondence of the at least one time and the encoder position.

In the embodiment, after the first controller acquires the retrieval time, it continues to query the retrieval time from a correspondence between the pre-latched time and the pre-latched encoder position. If the retrieval time is queried, step S103 is performed, or else if the retrieval time is not queried, step S104 is performed.

At S103, if the retrieval time is queried, the first controller determines that the encoder position corresponding to the retrieval time in the correspondence is the target encoder position.

Optionally, the FPGA chip can contain a plurality of programmable arrays, and the plurality of arrays can be configured to implement different functions. The first controller can send the retrieval time to the first programmable unit array via the FPGA chip's on-chip bus general purpose interface (Advanced eXtensible Interface-General Purpose, AXI-GP), the first programmable unit array can acquire the encoder position corresponding to the retrieval time as the target encoder position based on the correspondence between the retrieval time and the encoder position stored in the register set and the time.

At S104, if the retrieval time is not queried, the first controller determines the target encoder position according to the following formula:

$$S_{t(n)} = S_{t(n-1)} + k \triangle t,$$

where $S_{t(n-1)}$ is the encoder position corresponding to the time closest to the retrieval time, $\Delta t$ is the time difference between the retrieval time and the time closest to the retrieval time, $k$ is a growth rate of the encoder position, and $n$ is a positive integer.

Optionally, the growth rate can be determined according to a formula (1) below:

$$k = \left( \frac{S_{t1} - S_{t2}}{t_1 - t_2} + \frac{S_{t2} - S_{t3}}{t_2 - t_3} \cdots + \frac{S_{t(n-1)} - S_{tn}}{t_{(n-1)} - t_n} \right) / n \qquad (1)$$

where $S_{ti}$ is the encoder position corresponding to time $t_i$, where i =1 to $n$.

By way of example, FIG. 4 shows an example diagram of correspondence between the pre-latched at least one time and encoder position. Assuming that the time to be queried is $t_{0-3}$, as shown in FIG. 4, and $t_0\text{-}3$ is not in the storage cell (the storage cell is the solid part of FIG. 4), the growth rate can be calculated with the following formula (2); and after that, based on the determined growth rate, the position of the target encoder corresponding to $t_{0-3}$ can be determined, as shown in the following formula (3).

$$k = \left( \frac{S_{t_0} - S_{t_{0-1}}}{t_0 - t_{0-1}} + \frac{S_{t_{0-1}} - S_{t_{0-2}}}{t_{0-1} - t_{0-2}} + \frac{S_{t_{0-2}} - S_{t_{0-3}}}{t_{0-2} - t_{0-3}} \right) / 3 \qquad (2)$$

$$S_{t_{0-3}} = S_{t_0} + k * \left( t_0 - t_{0-3} \right) \qquad (3)$$

where $t_0$ is the closest time to $t_{0-3}$ in the storage cell, and $S_{t_0}$ is the encoder position corresponding to $t_0$.

Optionally, in order to maximise the accuracy of the determined target encoder position, two growth rates can be recorded, denoted $k_1$ and $k_2$, where $k_1$ is a positive value and $k_2$ is a negative value; if the growth rate denoted $k_1$ is monotonically increased, $k_1$ is an exponential moving average value; and if the growth rate denoted $k_2$ is monotonically decreased, $k_2$ is an exponential moving average value; and the timestamp of the intersection of $k_1$ and $k_2$ is recorded. If the retrieval time is not queried, a corresponding calculation algorithmic can be performed to determine as accurately as possible the location of the target encoder corresponding to the retrieval time, based on the time interval in which the retrieval time is located.

At S105, the first controller transmits the target encoder position to the second controller.

Optionally, the first programmable unit array can return the acquired target encoder position to the first controller via a General-Purpose (GP) interface or a High-Purpose (HP) interface. The first controller further transmits the received target encoder position in the form of a telegram to the second controller via the AXI-GP interface to enable the second controller to control the machine device to perform a corresponding movement based on that target encoder position. Taking the transfer of workpieces in industrial production as an example, the second controller, after acquiring a target encoder position corresponding to any retrieval time, can control the robot to reach the workpiece corresponding to that target encoder position to perform an operation such as clamping.

In summary, in the embodiment the provided method for acquiring an encoder position in a distributed system, applying the distributed system, can include: acquiring the retrieval time from the second controller and querying the retrieval time from the correspondence, by the first controller; and determining the encoder position in the correspondence corresponding to the retrieval time as the target encoder position if querying the retrieval time; determining the target encoder position according to a formula if failing to query the time retrieve; and returning the target encoder position to the second controller by the first controller. In the technical solution of the disclosure, the target encoder position can be determined by selecting a suitable way for both cases of whether or not the retrieval time is queried, so as to return the target encoder position to the second controller, thereby enabling the second controller to carry out a motion control of a machinery device based on the position information, achieving efficient positioning for the encoder, and resulting in higher accuracy of the acquired encoder position.

Optionally, the first controller can include a first programmable unit array and a register set, and the first programmable unit array can query the retrieval time from the register set in a cyclic reading/writing manner.

It should be noted that, in the embodiment, the register set can be a Random Access Memory (RAM) register set, which allows data to be read and written fatly at any time, and the register set is usually used as a temporary data storage medium for an operating system or other running programme.

Optionally, a correspondence between the position information of the encoder and the time is stored in the register set, wherein the time can be understood as a time identity, i.e., time information. It can be appreciated that the register set stores the position information of the encoder at different times. The first programmable unit array can compare the retrieved time with the time stored in the register set based on the retrieved time. If there is a time in the register set that is the same as the retrieved time, it can determine that in the register set the encoder position corresponding to the time is the target encoder position.

In some embodiments, the first programmable unit array performs a retrieval action on the register set based on the received retrieval time. If the retrieval hits, the retrieval action is terminated and the position information of the corresponding target encoder is output; if the retrieval does not hit, the cyclic reading/writing method is continued until all the data in the register set is traversed. Upon completion of each retrieval, the status of the retrieval hit identifier and the result of the retrieval (i.e., the target encoder position) can be returned.

It should be noted that there is a plurality of table entries in the register set, and the correspondence between the time and the encoder position is stored in different table entries, i.e., the correspondence between the time and the encoder position corresponds to the number of table entries in the register set one by one.

In some embodiments, if there is a retrieval time in the register set, the location of the target encoder can be acquired directly in the table entry corresponding to that retrieval time. If the retrieval time is not found in the current table entry query, then continue to retrieve the other table entries in the register set until all the table entries in the register set have been traversed. If the retrieval time is still not found, the target encoder position corresponding to the retrieval time is determined according to the formula $S_{t(n)} = S_{t(n-1)} + k\triangle t$.

Optionally, the result of the query for the retrieval time can be labelled with an associated identifier, wherein the retrieval time is used as the identifier if the retrieval time is queried, and 0 is used as the identifier if the retrieval time is not queried.

As the progression of the system time for the year, month, day, hour and second, milliseconds subtle nanosecond level time, time has uniqueness, so the same logo can be used to identify the same storage capacity to identify the two kinds of information, in order to save the system's storage capacity, improve the capacity of the storage information. If the retrieval time is found, the content of the mark is the corresponding retrieval time; if no retrieval time is found, the content of the mark is all zeroes, i.e., all zeroes are used to identify that no retrieval time has been found.

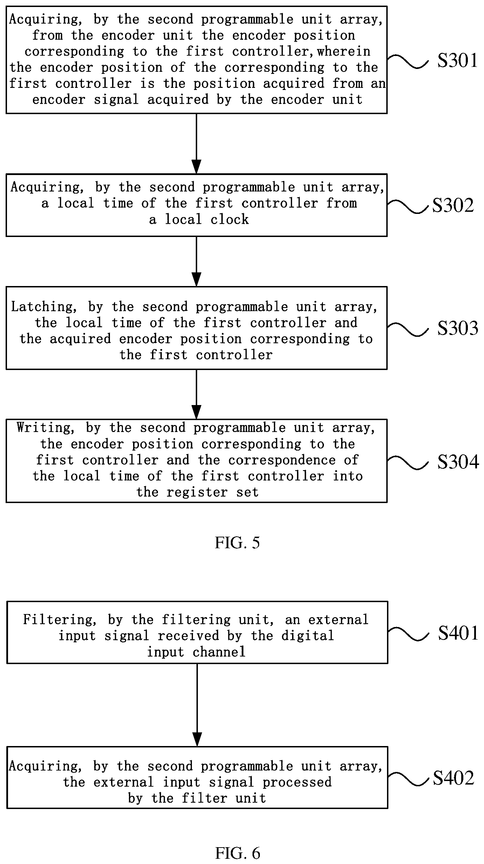

FIG. 5 shows a flow diagram of a method for acquiring an encoder position in another distributed system provided in an embodiment of the disclosure. Optionally, the first controller further includes a second programmable unit array and an encoder unit, the encoder unit being connected to a corresponding encoder of the first controller, so that the methods of the disclosure can further include the following steps S301 to S304.

At S301, the second programmable unit array acquires an encoder position corresponding to the first controller from the encoder unit; the encoder position corresponding to the first controller is a position acquired by the encoder unit based on the acquired encoder signal.

It is to be noted that the above is the processor of the first controller controlling the first programmable unit array to perform the retrieval of the encoder position based on the received retrieval time sent by the second controller. And before the retrieval, it is first necessary to write the correspondence between the position and the time of the encoder corresponding to the first controller into the register set to enable can the first programmable unit array to carry out the retrieval of the encoder position in the register set.

Optionally, the encoder in the drive motor can convert the detected position and speed of the drive motor into an electrical signal (the encoder signal) and send it to the encoder unit. The processor of the first controller acquires the encoder signal from the encoder unit and acquires the encoder position based on the encoder signal.

At S302, the second programmable unit array acquires a local time of the first controller from a local clock.

In addition, the local time of an encoder in a distributed system is divided into a master mode and a slave mode. In this case, in the master mode, for the second controller, the local time is first acquired instantaneously by the real time clock (RTC), and will subsequently be synchronised with the RTC periodically. For the first controller, a master-slave clocking method can be used to encode the time information through the precise time protocol (PTP) synchronisation mechanism, applying the symmetry of the network and the delay measurement technique to achieve the synchronisation of the master-slave time, which enables the whole distributed system to work in the same synchronisation domain applying a unified clock for the maintenance and updating of the local time.

Optionally, the local clock is used to store the local time of the encoder corresponding to each of the first controllers, and the second programmable unit array acquires the local time from the local clock.

At S303, the second programmable unit array latches the acquired encoder position corresponding to the first controller, and the local time of the first controller.

In some embodiments, after the second programmable unit array acquires the encoder position corresponding to the first controller from the encoder unit and the local time of the first controller from the local clock, it will first locally latch the local time of the first controller and the encoder position corresponding to the first controller, so as to facilitate the further writing the latched encoder position corresponding to the first controller, and the local time of the first controller, to the register set for storage.

At S304, the second programmable unit array writes the encoder position corresponding to the first controller, and the correspondence of the local time of the first controller into the register set.

It is to be noted that the second programmable unit array can be understood as a controller that controls the register set for encoder position storage. Optionally, the second programmable unit array can write a correspondence between the encoder position corresponding to the first controller acquired from the encoder unit and the local time of the first controller acquired from the local clock into the register set, i.e., to achieve storage of the encoder position.

FIG. 6 shows a flow diagram of another method for acquiring an encoder position in the distributed system provided in an embodiment of the disclosure. Optionally, as shown in FIG. 6, the first controller further includes a digital input channel and a filter unit located between the digital input channel and the second programmable unit array, so that the method of the disclosure can further include the steps S401 to S402.

At S401, the filter unit filters the external input signal received by the digital input channel.

Optionally, the digital input channel in the embodiment can include an ordinary Digital Input (DI) channel and a high-speed DI. This external input signal can be the trigger signal for the trigger register set for encoder position latching. The filtering unit can be a digital filtering unit with a system clock frequency of 125MHz, which completes the functions of filtering (filter coefficients can be configured) and state detection of the received external input signals and eliminates noise interference. It contains two-level modes of de-jittering and recursive mean filtering: the first-level mode, de-jittering the input high-speed digital signals, if the value is constant at 1 in the set period, the input digital quantity is considered to be 1; the second-level mode, recursive mean filtering the digital quantities after de-jittering and outputting the filtering results.

At S402, the second programmable unit array acquires the external input signal processed by the filter unit.

Optionally, the second programmable unit array can write a correspondence of the encoder position corresponding to the first controller and the local time of the first controller into the register set based on the acquired filtered external input signal. By filtering the external input signal, signal jitter can be effectively prevented, and the encoder position latching is more flexible, so that the latching of the encoder position corresponding to the processor of the first controller can be carried out accurately and timely.

Optionally, in the above Step S402, before the second programmable unit array acquires the external input signal processed by the filtering unit, the method can further include: acquiring, by the second programmable unit array, the latch configuration parameters from the processor of the first controller.

Optionally, the latch configuration parameters include: latch source information, latch input and output pin information, and latch mode information. The latching source information is used to indicate the external trigger source of the encoder corresponding to the first controller; the latching input and output pin information is used to indicate the input pins of the digital input channel; and the latch mode information is used to indicate the position latching mode of the encoder corresponding to the first controller.

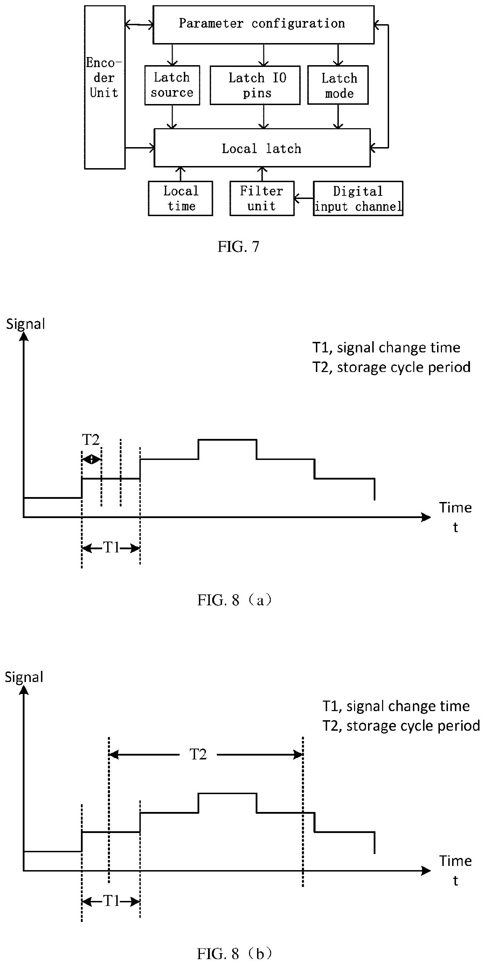

FIG. 7 shows a schematic diagram of the processing logic of an encoder position latch function provided in an embodiment of the disclosure. As shown in FIG. 7, the processing logic for this encoder position latch function can include a number of parts, such as parameter configuration, latch source, latch input and output port pins, latch mode, local latch, local time, filter unit, digital input channel, and so on.

Optionally, before the second programmable unit array writes the correspondence of the position and time of the encoder corresponding to the first controller into the register set, the second programmable unit array also needs to receive the latching configuration parameter sent by the processor of the first controller, and upon receiving the filtered external input signal, write the locally latching local time of the first controller with the encoder position in the register set for storage according to the latching configuration parameter, and at the same time feedback the storage result to the processor of the first controller. Table 1 below provides a brief description of the latch function configuration parameters.

Table 1

| Parameter name | bit width | Definition |
|---|---|---|
| Latch_EN | 1 | Enable Encoder_Latch function, active high |
| Latch_IO | 8 | Selection of IO pins for the high-speed IO interface trigger signals (DIN), currently available for high channel HDI [1:0] and normal channel DI [3:0] |
| Latch_SRC | 8 | Selection of DIN category, e.g. Z-phase trigger source, external HDI trigger source, etc. |
| Latch_MODE | 8 | Selectable rising edge/falling edge/high level/combined latching |
| Latch_POS | 32 | Encoder position values in distributed systems |
| Latch_TS | 32 | Time corresponding to encoder position information in a distributed system |
| Latch_CLR | 1 | Register set zeroing, high active |

Among them, the functions of the encoder position latch function module in FIG. 7 can be understood with reference to the following explanation.

Latching Source: trigger source for encoder local position latching, including external HDI trigger source, Z-phase trigger source, network trigger source, etc; external HDI trigger source in general.

Latching input and output pins: PL terminal input pins of FPGA chip, including HDI[1:0] and DI[3:0]; capable to be configured according to the actual hardware wiring diagram.

Latch mode: the latch mode of the encoder's local position, including rising edge latch, falling edge latch, high level latch and combination latch, where combination latch only appears in the case of incremental encoders.

Encoder Unit: encoder module, achieving the function of reading information and modifying information of different absolute encoders, and achieving the counting function of incremental encoder, judgement of A/B phase orthogonality, monitoring of Index error/noise and so on.

Local time: the local time in the distributed system being divided into master mode and slave mode, wherein: under the master mode, the local time is firstly acquired by the RTC timing, and then it will be synchronised with the RTC periodically; under the slave mode, the maintenance and update of the local time is completed through the PTP synchronisation mechanism. The entire distributed system works in the same synchronisation domain and uses a uniform clock.

Filter unit: digital filter unit, with system clock frequency 125MHz, achieving the functions of signal filtering (filter coefficients are configurable) and state detection of external digital input channels to eliminate noise interference, wherein there are two-level modes of de-jittering and recursive mean filtering: the first-level mode, de-jittering the input high-speed digital signals, i.e., if the value is constant at 1 in the set period, the input digital quantity is considered to be 1; the second-level mode, recursive mean filtering the digital quantities after de-jittering and outputting the filtering results.

Digital Input Channel: digital input channel of FPGA chip, including normal DI and high-speed DI.

Optionally, in the above Step S402, before the second programmable unit array writes the correspondence of the encoder position corresponding to the first controller, and the local time of the first controller into the register set, the method can further include: the second programmable unit array triggers the position latching function of the encoder corresponding to the first controller, based on the latch mode information.

Optionally, the second programmable unit array can determine a triggering mode of the encoder position latching function based on the latch mode information in the latching function configuration parameter, for example, applying a rising edge trigger, a falling edge trigger, a high level trigger, or a combination trigger, etc.

Optionally, in the above Step S402, the second programmable unit array writes the correspondence of the encoder position corresponding to the first controller and the local time of the first controller into the register set, which can include: The second programmable unit array writes the encoder position corresponding to the first controller, and the correspondence of the local time of the first controller, into the register set applying a predetermined storage cycle period; the storage cycle period is greater than the network delay from the digital input channel to the register set.

It will be appreciated that in the foregoing description, the first programmable unit array, in performing the retrieval of the encoder position from the register set based on the retrieval time, uses a cyclic reading method to acquire the encoder position from the register set. In the embodiment, the same cyclic storage is used for latching in the process of storing the encoder position in the register set.

In the embodiment, the array of second programmable units can use a predetermined storage cycle period to write a correspondence of the encoder position corresponding to the first controller, and the local time of the first controller to the register set. Optionally, in order to make the current encoder position of the register set not to be overwritten by later storage actions before the arrival of the retrieval signal transmission during cyclic storage, the depth of the Ring_Buffer in the register set, i.e., the number of table entries in the aforementioned register set, depends on the relationship between the storage cycle period (Wr_Period) and the network communication delay (QNET_Delay) in the embodiment. The storage cycle period needs to be greater than the network delay from the digital input channel to the register set. Thus, it is ensured that the depth of the ring buffer satisfies the condition such that the current encoder position is not overwritten by later storage actions before the retrieval signal transmission arrives.

In the embodiment, the network delay of the digital input channel to the register set can be the result of the superposition of a plurality of times as follows: the time when the second controller receives the external trigger signal to the time when the second programmable unit array of the first controller uploads the storage result of the register set to the processor of the first controller, the time when the processor of the first controller uploads the storage result of the register set to the second controller, the time when the second controller sends down the retrieval time to the processor of the other respective first controllers, and the time when the processor of the other respective first controllers sends down the retrieval time to the first programmable unit array/register set.

Optionally, the storage cycle period is equal to the period of change of the external input signal.

In some embodiments, in addition to the requirement that the storage cycle period is greater than the network delay from the digital input channel to the register set. The storage cycle period can be determined in conjunction with the actual application scenario of the distributed system, and the network delay between different nodes.

If the storage cycle period is less than the network delay from the digital input channel to the register set, although the corresponding information can be stored very quickly at this point, the information is redundant and repetitive. In other words, if the storage cycle period is smaller than the period of the actual change of the signal, the stored data will be repetitive and meaningless, and it will lead to a waste of storage capacity. As shown in FIG. 8(a), assuming that the actual signal is a signal that varies by steps, it is meaningless to store more signals of the same Step, although the data is stored quickly, the same data is stored. On the contrary, if the storage cycle period is too large, some information that the system wishes to use will also be lost, as shown in FIG. 8(b) below, assuming that the actual signal is a signal that changes according to Steps, if the data of many consecutive Step changes are not recorded, it will result in a serious loss of information, which will lead to the information of the system not being able to be used normally for the control calculation.

Optionally, assuming that the change time of the signal is T1 and the storage cycle period is T2, then T2 = T1 in ideal condition. However in the actual scenario, the transmission of the signal is delayed by the network in addition to the delay of the hardware. Supposing the hardware delay is t1 and the network delay is t2, then T2 should preferably be equal to T1+max (t1, t2) .

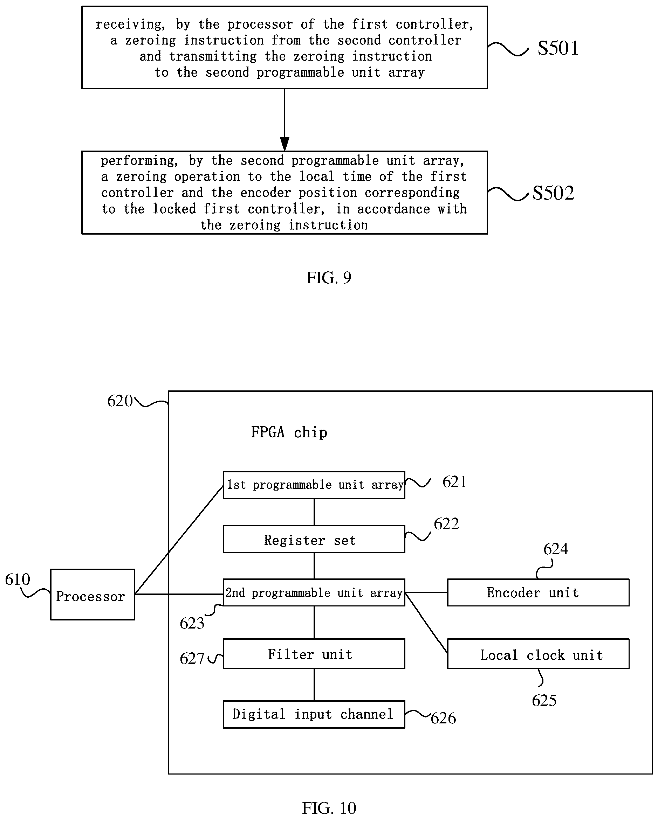

FIG. 9 shows a flow diagram of another method for acquiring an encoder position in the distributed system provided in an embodiment of the disclosure. Optionally, as shown in FIG. 9, the method of the disclosure can further include the following steps:

S501, receiving, by the processor of the first controller, a zeroing instruction from the second controller and transmitting the zeroing instruction to the second programmable unit array;

S502, performing, by the second programmable unit array, a zeroing operation to the local time of the first controller and the encoder position corresponding to the locked first controller, in accordance with the zeroing instruction.

Optionally, in order to ensure the accuracy of the latching of the encoder position, as well as to avoid insufficient use of the memory, in the embodiment, the processor of the first controller can also receive a zeroing instruction from the second controller, and transmit the zeroing instruction to the second programmable unit array, so as to enable the second programmable unit array to clear the latched encoder position corresponding to the first controller, as well as to clear the local time of the first controller according to the zeroing instruction. In the embodiment, the second controller can send a zeroing instruction to the processor of the first controller according to the predetermined cycle time. The predetermined cycle period time can be set according to the actual latching requirements since there is no specific restriction.

Optionally, in the above Step S105, transmitting, by the first controller, the target encoder position to the second controller, can includes: transmitting, by the processor of the first controller, the target encoder position to the second controller via real-time Ethernet messages.

Optionally, in the PTP synchronisation mechanism of the distributed system, real-time Ethernet messages (QNET) and normal Ethernet messages can be included. The transmission priority of real-time Ethernet messages is the highest in comparison. In a communication network with a bandwidth of 1Gb/s, the transmission of real-time Ethernet messages is guaranteed in priority under all circumstances, and a fixed bandwidth can also be set for the transmission of real-time network messages. In the disclosure, a real-time Ethernet message is used for information transmission between the processor of the first controller and the second controller, which effectively improves the stability of the transmission of the retrieval results and reduces the transmission delay time.

In summary, in the embodiment the method for acquiring an encoder position in a distributed system is applied to the distributed system. The method for processing the encoder position in the distributed system can include: acquiring, by the first controller, a retrieval time from the second controller and querying the retrieval time from the correspondence; determining the encoder position in the correspondence corresponding to the retrieval time as the target encoder position if the retrieval time is queried; determining the target encoder position according to a formula if the retrieval time is not queried; and returning the target encoder position to the second controller by the first controller. In the technical solution of the disclosure, the target encoder position can be determined by selecting a suitable way for both cases of whether or not the retrieval time is queried, so as to return the target encoder position to the second controller, thereby enabling the second controller to carry out a motion control of a machinery device based on the position information, achieving efficient positioning for the encoder, and resulting in higher accuracy of the acquired encoder position.

Secondly, before the second programmable unit array acquires the external input signal, the signal jitter can be effectively prevented by adding a filtering unit to filter the external input signal. The encoder position latching is more flexible so that the latching of the encoder position corresponding to the first controller can be carried out accurately and in a timely manner.

In addition, a real-time Ethernet message is used for information transmission between the processor of the first controller and the second controller, which effectively improves the stability of the transmission of the retrieval results and reduces the transmission delay time.

The following describes the controller corresponding to the method for acquiring the encoder position in the distributed system provided in the disclosure, wherein the specific implementation process and the technical effect thereof are described above and will not be repeated hereinafter.

FIG. 10 shows a schematic diagram of a controller provided in an embodiment of the disclosure, which can be applied in the method for acquiring an encoder position in the distributed system as described above. As shown in FIG. 10, the controller can include: a processor 610 and an FPGA chip 620, with a first programmable unit array 621 and a register set 622 integrated on the FPGA chip 620. In the register set 622, at least one correspondence between the time and the encoder position is pre-latched.

The processor 610 acquires retrieval times from other controllers and sends the retrieval times to the first programmable unit array 621.

The first programmable unit array 621 queries the retrieval time from a correspondence. If the retrieval time is queried, the first programmable unit array determines that the encoder position corresponding to the retrieval time in the correspondence is the target encoder position.

If the retrieval time is not queried, the first controller determines the target encoder position according to the following formula: $S_{t(n)} = S_{t(n-1)} + k \triangle t$, where $S_{t(n-1)}$ is the encoder position corresponding to the time closest to the retrieval time, $\triangle t$ is the time difference between the retrieval time and the time closest to the retrieval time, $k$ is the growth rate of the encoder position, and $n$ is a positive integer.

The first programmable unit array 621 is also used to transmit the target encoder position to the processor 610. The processor 610 transmits the target encoder position to the other controllers.

Optionally, a second programmable unit array 623 and an encoder unit 624 are also integrated on the FPGA chip 620, and the encoder unit 624 is connected to an encoder corresponding to the first controller.

The second programmable unit array 623 acquires the encoder position corresponding to the controller from the encoder unit 624. The encoder position corresponding to the controller is a position acquired by the encoder unit on the basis of the acquired encoder signal.

Optionally, a local clock unit 625 is also integrated on the FPGA chip 620. The second programmable unit array 623 is also used to acquire the local time of the controller from the local clock unit 625.

The second programmable unit array 623, is further used to latch the acquired encoder position corresponding to the controller, and the local time of the controller;

The second programmable unit array 623, is also used to write the encoder position corresponding to the controller, and the correspondence of the local time of the controller into the register set 622.

Optionally, a digital input channel 626 and a filter unit 627 are also integrated on the FPGA chip 620. The filter unit 627 is located between the digital input channel 626 and the second programmable unit array 623.

The filtering unit 627 is used for filtering an external input signal received by the digital input channel 626.

The second programmable unit array 623 is also used to acquire an external input signal after processing by the filter unit 627.

Optionally, the second programmable unit array 623 is further used to acquire the latch configuration parameters from the processor 610.

Optionally, the latch configuration parameters include: latch source information, latch input and output pin information, and latch mode information.

The latching source information is used to indicate the external trigger source of the encoder corresponding to the controller; the latching input and output pin information is used to indicate the input pins of the digital input channel; and the latch mode information is used to indicate the position latching mode of the encoder corresponding to the controller.

Optionally, the second programmable unit array 623 is further used to trigger a position latching function of a corresponding encoder of the controller based on the latch mode information.

Optionally, the second programmable unit array 623 is specifically used to write a correspondence of the encoder position corresponding to the controller, and the local time of the controller, into the register set 622 in a predetermined storage cycle period. The storage cycle period is greater than the network delay from the digital input channel to the register set.

Optionally, the processor 610 is also used to receive zeroing instructions from other controllers and transmit the zeroing instructions to the second programmable unit array 623.

The second programmable unit array 623 is also used to perform a zeroing operation on the latched encoder position corresponding to the controller, and the local time of the controller, according to the zeroing instruction.

Optionally, the processor 610 transmits the retrieval results to other controllers via real-time Ethernet messages.

It should be noted that the controller provided in the disclosure can also have other logic units in the first controller related to any of the above embodiments, which can perform the functions corresponding to the other logic units described above, the specific description of which is described above and will not be repeated herein.

The following describes the distributed system for performing the method for acquiring an encoder position in the distributed system provided in the disclosure, and the specific implementation process and technical effects thereof are described above and will not be repeated below.

**EP 4 325 306 A1**

The distributed system provided in the disclosure can include: a first controller and a second controller, wherein the first controller includes: a processor and a field programmable gate array FPGA chip.

In embodiments of the disclosure, the second controller is used to generate a message including a retrieval time and transmit the message to a processor of the first controller.

The first programmable unit array and the register set is integrated on the FPGA chip of the first controller. The register set is pre-latched with at least one correspondence between a time and an encoder position.

The first programmable unit array is used for querying the retrieval time from a correspondence. If the retrieval time is queried, the first programmable unit array determines that the encoder position corresponding to the retrieval time in the correspondence is the target encoder position. If the retrieval time is not queried, the first controller determines the target encoder position according to the following formula: $S_{t(n)} = S_{t(n-1)} + k\triangle t$, where $S_{t(n-1)}$ is the encoder position corresponding to the time closest to the retrieval time, $\Delta t$ is the time difference between the retrieval time and the time closest to the retrieval time, $k$ is the growth rate of the encoder position, and $n$ is a positive integer.

The first programmable unit array is further used to transmit the target encoder position to a processor of the first controller.

The processor of the first controller is further used to transmit the target encoder position to the second controller.

It should be noted that the distributed system provided in the disclosure can also have other logic units in the first controller related to any of the above embodiments, which can perform functions corresponding to the other logic units described above. The specific description of which is described above and will not be repeated herein.

The above are only specific embodiments of the disclosure, but the scope of protection of the disclosure is not limited thereto. Those skilled in the art can easily envisage variations or substitutions within the scope of the technical solution in the disclosure, which shall be covered by the scope of protection of the disclosure. Therefore, the scope of protection of the disclosure shall be subject to the scope of protection of the claims.

**Claims**

1. A method for acquiring an encoder position in a distributed system, wherein the distributed system comprises a first controller, a second controller and an encoder, the first controller pre-latches at least one correspondence between a time and an encoder position, and the method comprises:

   acquiring, by the first controller, a retrieval time from the second controller;
   querying, by the first controller, the retrieval time from the correspondence;

   if querying the retrieval time, determining, by the first controller, a target encoder position being the encoder position corresponding to the retrieval time in the correspondence;
   if not querying the retrieval time, determining, by the first controller, the target encoder position according to the following formula:

   $$S_{t(n)} = S_{t(n-1)} + k\triangle t,$$

   where $S_{t(n-1)}$ is the encoder position corresponding to the time closest to the retrieval time, $\Delta t$ is a time difference between the retrieval time and the time closest to the retrieval time, $k$ is a growth rate of the encoder position, and $n$ is a positive integer; and transmitting, by the first controller, the target encoder position to the second controller.

2. The method according to claim 1, wherein the growth rate is determined according to the following formula:

   $$k = \left( \frac{S_{t1} - S_{t2}}{t_1 - t_2} + \frac{S_{t2} - S_{t3}}{t_2 - t_3} \ldots + \frac{S_{t(n-1)} - S_{tm}}{t_{(n-1)} - t_n} \right) / n \,.$$

3. The method according to claim 1 or 2, comprising: if querying the retrieval time, applying the retrieval time as an identifier; if not querying the retrieval time, applying 0 as an identifier.

4. The method according to claim 1 or 2, wherein the first controller comprises a first programmable unit array and a register set, and querying the retrieval time from the correspondence by the first controller comprises:

14

querying, by the first programmable unit array, the retrieval time from the register set by cyclic reading and writing.

5. The method according to claim 4, wherein the first controller comprises a second programmable unit array and an encoder unit, the encoder unit is connected to an encoder corresponding to the first controller, and the method comprises:

acquiring, by the second programmable unit array, from the encoder unit the encoder position corresponding to the first controller, wherein the encoder position of the corresponding to the first controller is the position acquired from an encoder signal acquired by the encoder unit;
acquiring, by the second programmable unit array, a local time of the first controller from a local clock;
latching, by the second programmable unit array, the local time of the first controller and the acquired encoder position corresponding to the first controller;
writing, by the second programmable unit array, the encoder position corresponding to the first controller and the correspondence of the local time of the first controller into the register set.

6. The method according to claim 5, wherein the first controller further comprises a digital input channel and a filter unit located between the digital input channel and the second programmable unit array, the method comprises:

filtering, by the filtering unit, an external input signal received by the digital input channel;
acquiring, by the second programmable unit array, the external input signal processed by the filter unit.

7. The method according to claim 6, wherein before the second programmable unit array acquires the external input signal processed by the filter unit, the method comprises:
acquiring, by the second programmable unit array, latch configuration parameters from the processor.

8. The method according to claim 7, wherein the latch configuration parameters comprise:

latch source information for indicating an external trigger source of the encoder corresponding to the first controller;
latch input and output pin information for indicating input pins of the digital input channel; and
latch mode information for indicating a position latch mode of the encoder corresponding to the first controller.

9. The method according to claim 8, wherein before the second programmable unit array writes the encoder position corresponding to the first controller and the correspondence of the local time of the first controller into the register set, the method comprises:
triggering, by the second programmable unit array, a position latching function of the encoder corresponding to the first controller based on the latch mode information.

10. The method according to claim 6, wherein writing the encoder position corresponding to the first controller and the correspondence of the local time of the first controller into the register set by the second programmable unit array comprises:
writing, by the second programmable unit array, the encoder position corresponding to the first controller and the correspondence of the local time of the first controller into the register set in a predetermined storage cycle period, wherein the storage cycle period is greater than the network delay from the digital input channel to the register set.

11. The method according to claim 10, wherein storage cycle period is equal to the period of change of the external input signal.

12. A controller, comprising a processor and a field programmable gate array FPGA chip integrating a first programmable unit array and a register set pre-latched with at least one correspondence between a time and an encoder position, wherein:

the processor acquires a retrieval time from another controller and sends the retrieval time to the first programmable unit array;
the first programmable unit array queries the retrieval time from the correspondence;

if the retrieval time is queried, the first programmable unit array determines that the encoder position in the correspondence corresponding to the retrieval time is a target encoder position;

if the retrieval time is not queried, the first controller determines the target encoder position according to the following formula:

$$S_{t(n)} = S_{t(n-1)} + k\triangle t,$$

where $S_{t(n-1)}$ is the encoder position corresponding to the time closest to the retrieval time, $\triangle t$ is a time difference between the retrieval time and the time closest to the retrieval time, $k$ is a growth rate of the encoder position, and $n$ is a positive integer; and

the first programmable unit array further transmits the target encoder position to the processor, and the processor transmits the target encoder position to the other controller.

13. A distributed system, comprising a first controller and a second controller, wherein:

the first controller comprises a processor and a field programmable gate array FPGA chip;
the second controller generates a message including a retrieval time and transmits to the processor of the first controller;
a first programmable unit array and a register set are integrated on the FPGA chip of the first controller, and the register set is pre-latched with at least one correspondence between a time and an encoder position;
the first programmable unit array queries the retrieval time from the correspondence;

if the retrieval time is queried, the first programmable unit array determines that the encoder position in the correspondence corresponding to the retrieval time is a target encoder position;
if the retrieval time is not queried, the first controller determines the target encoder position according to the following formula:

$$S_{t(n)} = S_{t(n-1)} + k\triangle t,$$

where $S_{t(n-1)}$ is the encoder position corresponding to the time closest to the retrieval time, $\triangle t$ is a time difference between the retrieval time and the time closest to the retrieval time, $k$ is a growth rate of the encoder position, and $n$ is a positive integer; and

the first programmable unit array further transmits the target encoder position to the processor of the first controller; and
the processor of the first controller transmits the target encoder position to the second controller.

FIG. 1

FIG. 2

Acquiring, by the first controller, the retrieval time from the second controller ∿ S101

Querying, by the first controller, the retrieved time from a pre-latched correspondence of the at least one time and the encoder position ∿ S102

If querying the retrieval time, determining, by the first controller, a target encoder position being the encoder position corresponding to the retrieval time in the correspondence ∿ S103

If not querying the retrieval time, determining, by the first controller the target encoder position according to the following formula: $S_{t(n)} = S_{t(n-1)} + k\triangle t$ ∿ S104

Transmitting, by the first controller, the target encoder position to the second controller ∿ S105

FIG. 3

$t_{0-3}$

$t_{0-2}$

$t_{0-1}$

$t_0$ $\quad S_{t0}$

$t_1$

$t_2$

$t_3$

...

FIG. 4

Acquiring, by the second programmable unit array, from the encoder unit the encoder position corresponding to the first controller, wherein the encoder position of the corresponding to the first controller is the position acquired from an encoder signal acquired by the encoder unit ⟋ S301

↓

Acquiring, by the second programmable unit array, a local time of the first controller from a local clock ⟋ S302

↓

Latching, by the second programmable unit array, the local time of the first controller and the acquired encoder position corresponding to the first controller ⟋ S303

↓

Writing, by the second programmable unit array, the encoder position corresponding to the first controller and the correspondence of the local time of the first controller into the register set ⟋ S304

FIG. 5

Filtering, by the filtering unit, an external input signal received by the digital input channel ⟋ S401

↓

Acquiring, by the second programmable unit array, the external input signal processed by the filter unit ⟋ S402

FIG. 6

FIG. 7

T1, signal change time
T2, storage cycle period

FIG. 8 （a）

T1, signal change time
T2, storage cycle period

FIG. 8 （b）

receiving, by the processor of the first controller,
a zeroing instruction from the second controller
and transmitting the zeroing instruction
to the second programmable unit array

S501

performing, by the second programmable unit array,
a zeroing operation to the local time of the first
controller and the encoder position corresponding
to the locked first controller, in accordance with
the zeroing instruction

S502

FIG. 9

620

FPGA chip

1st programmable unit array — 621

Register set — 622

624

610

Processor

2nd programmable unit array

Encoder unit

623

627

Filter unit

Local clock unit

625

Digital input channel — 626

FIG. 10

## INTERNATIONAL SEARCH REPORT

| International application No. |
| --- |
| **PCT/CN2021/087898** |

**A. CLASSIFICATION OF SUBJECT MATTER**

G05B 19/042(2006.01)i

According to International Patent Classification (IPC) or to both national classification and IPC

**B. FIELDS SEARCHED**

Minimum documentation searched (classification system followed by classification symbols)

G05B19/-; G06F15/-; H04L12/-; H04L29/-

Documentation searched other than minimum documentation to the extent that such documents are included in the fields searched

Electronic data base consulted during the international search (name of data base and, where practicable, search terms used)

CNTXT; CNABS; VEN: 分布式, 组网, 网络, 定位, 位置, 编码器, 位置, 时间, 时刻, 计时, DCS, distribut+, network, position, encoder, retrieval, time

**C. DOCUMENTS CONSIDERED TO BE RELEVANT**

| Category* | Citation of document, with indication, where appropriate, of the relevant passages | Relevant to claim No. |
| --- | --- | --- |
| Y | CN 110989475 A (DONGGUAN QUOTIENT KINEMATICS MACHINE TECHNOLOGY CO., LTD.) 10 April 2020 (2020-04-10) description, paragraphs [0005]-[0193], and figures 1-9 | 1-13 |
| Y | CN 111025960 A (SHENZHEN VMMORE CTRL. & TECH. CO., LTD.) 17 April 2020 (2020-04-17) description, paragraphs [0033]-[0039] | 1-13 |
| A | CN 1540291 A (MITUTOYO CORP.) 27 October 2004 (2004-10-27) entire document | 1-13 |
| A | KR 20050011940 A (METRONIX CO., LTD.) 31 January 2005 (2005-01-31) entire document | 1-13 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **11 January 2022** | **19 January 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2021/087898**

| Patent document cited in search report | | | Publication date (day/month/year) | Patent family member(s) | | | Publication date (day/month/year) |
|---|---|---|---|---|---|---|---|
| CN | 110989475 | A | 10 April 2020 | CN | 110989475 | B | 09 February 2021 |
| CN | 111025960 | A | 17 April 2020 | None | | | |
| CN | 1540291 | A | 27 October 2004 | CN | 100504307 | C | 24 June 2009 |
| | | | | EP | 1480013 | A2 | 24 November 2004 |
| | | | | EP | 1480013 | A3 | 05 January 2005 |
| | | | | EP | 1480013 | B1 | 19 September 2018 |
| | | | | US | 2004212521 | A1 | 28 October 2004 |
| | | | | US | 6937169 | B2 | 30 August 2005 |
| | | | | JP | 2004326338 | A | 18 November 2004 |
| | | | | JP | 2004341978 | A | 02 December 2004 |
| | | | | JP | 4202187 | B2 | 24 December 2008 |
| KR | 20050011940 | A | 31 January 2005 | KR | 100518638 | B1 | 30 September 2005 |

Form PCT/ISA/210 (patent family annex) (January 2015)